(19) Europäisches Patentamt
European Patent Office
Office européen des brevets

(11) EP 2 177 869 A2

(12) # EUROPEAN PATENT APPLICATION

(43) Date of publication:
**21.04.2010 Bulletin 2010/16**

(21) Application number: **09173463.2**

(22) Date of filing: **20.10.2009**

(51) Int Cl.:
***G01B 11/00*** *(2006.01)* ***G01C 3/00*** *(2006.01)*
***G02B 3/00*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **20.10.2008 JP 2008270060**

(71) Applicants:
- **Funai Electric Co., Ltd.**
  **Daito-shi,**
  **Osaka 574-0013 (JP)**
- **Osaka University**
  **Suita-shi**
  **Osaka 565-0871 (JP)**

(72) Inventors:
- **Tanida, Jun**
  **Suita-shi Osaka 565-0871 (JP)**
- **Horisaki, Ryoichi**
  **Suita-shi Osaka 565-0871 (JP)**
- **Nakao, Yoshizumi**
  **Daito-shi Osaka 574-0013 (JP)**
- **Toyoda, Takashi**
  **Daito-shi Osaka 574-0013 (JP)**
- **Masaki, Yasuo**
  **Daito-shi Osaka 574-0013 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Object distance deriving device**

(57) An object distance deriving device comprises: a compound-eye imaging device having imaging units with optical lenses randomly arranged for the respective imaging units; and a distance calculation unit to calculate an object distance using images captured by the compound-eye imaging device. The distance calculation unit: sets temporary distances z (S1); calculates an imaging process matrix [Hz] according to a temporary distance z (S2); estimates a high-resolution image by super-resolution processing using the imaging process matrix [Hz] (S3); uses the estimated high-resolution image to calculate an evaluation value distribution E for evaluating the temporary distance z (S4); repeats steps S2 to S4 for all temporary distances z (S5); and determines, as an object distance, one temporary distance z giving a minimum evaluation value in the evaluation value distributions E. This makes it possible to accurately derive the object distance even if the baseline length of the compound-eye imaging device is limited.

FIG. 1
A/D
MICRO-PROCESSOR
MEMORY
RAM
ROM

EP 2 177 869 A2

## Description

## BACKGROUND OF THE INVENTION

### 1. Field of the Invention

The present invention relates to an object distance deriving device, and more particularly to an object distance deriving device which has imaging means and derives a distance of an object from the imaging means based on a high-resolution image estimated by super-resolution processing using images captured by the imaging means.

### 2. Description of the Related Art

An imaging device is known which comprises multiple optical lenses and an imaging element (photodetector) for capturing multiple images of an object (target object) that are formed by the optical lenses. It is known to derive a distance of the object from the imaging device by using parallax between images of the object captured by the imaging device (refer to e.g. Japanese Laid-open Patent Publication 2007-271301). In order to more accurately derive the distance of the object from the imaging device by using parallax, the baseline length between the optical lenses is required to be set longer. This unavoidably increases the size of the entire imaging device. Thus, for example, it is difficult to use a size-reduced compound-eye imaging device adapted to cars as an object distant deriving device using parallax described above.

More specifically, a size-reduced compound-eye imaging device is designed, for example, to have a cubic shape with a side length of about 10 mm. Such compound-eye imaging device does not make it possible to secure a sufficient baseline length of about a few meters to 10 m or longer by using parallax. On the other hand, in a compound-eye imaging device with optical lenses regularly arranged at a constant interval, the same point on an object (target object) located far from the imaging device is observed by all the optical lenses at substantially the same angle. This makes it impossible to obtain parallax between the unit images, and thus to accurately derive the distance of the object.

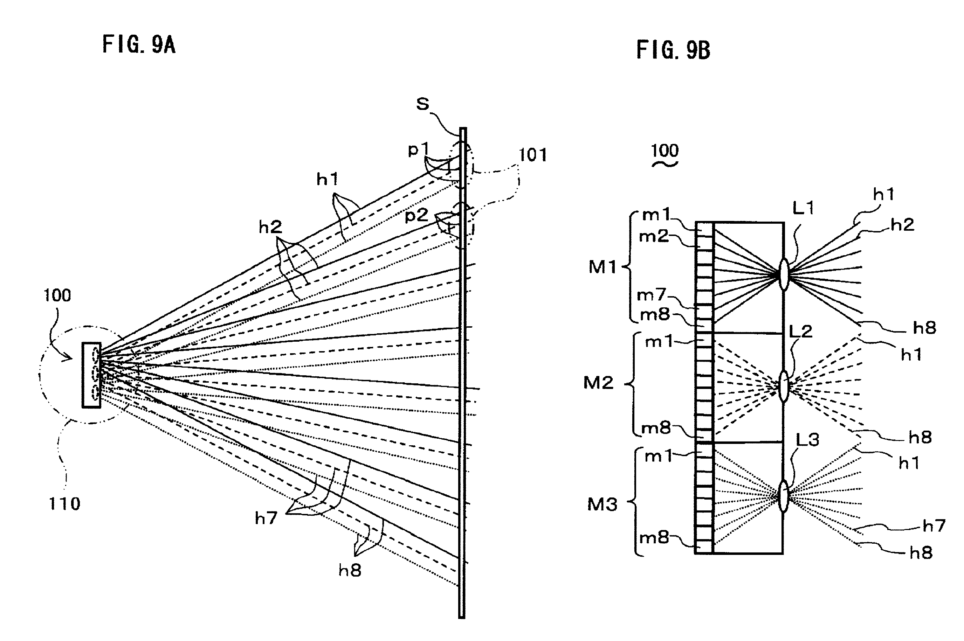

This will be described in detail with reference to FIG. 9A and FIG. 9B, in which FIG. 9A is a schematic side view of a conventional compound-eye imaging device 100, placed vertically, in a mode of collecting lights by optical lenses from an object S positioned in front of the compound-eye imaging device 100, while FIG. 9B is a schematic enlarged side view of a portion of FIG. 9A as indicated by the dash-dotted circle 110. The compound-eye imaging device 100 comprises optical lenses L1, L2 and L3 and solid-state imaging elements M1, M2 and M3 for capturing unit images formed by the respective optical lenses L1, L2 and L3. Each of the solid-state imaging elements M1, M2 and M3 has multiple (eight) light-receiving elements m1, m2·· m8.

In the compound-eye imaging device 100, the optical lens L1 collects and the light-receiving elements m1, m2·· m8 receive lights h1, h2·· which are parallel to the corresponding lights h1, h2·· which are collected by each of the optical lenses L2 and L3 and received by the light-receiving elements m1, m2·· m8 of each of the optical lenses L2 and L3. This results in the phenomenon that intersection points p1, p2·· on the object S, at which the respective lights h1, h2·· intersect the object S and which serve as observation points on the object S seen from the compound-eye imaging device 100, are locally concentrated on a distant object plane (imaginary object plane), thus eliminating parallax between the unit images. This phenomenon can be referred to as degeneracy (refer to the dash-dotted circle 101). When degeneracy occurs, the dispersion of the intersection points (observation points) p seen from the compound-eye imaging device 100 decreases, reducing a substantial amount of information of captured images. This makes it difficult to identify the same point on the object S between unit images, making it impossible to accurately derive the distance of the object S.

On the other hand, in a compound-eye imaging device having many optical lenses arranged in an array of rows and columns, it is also known to change the focal lengths of the respective optical lenses sequentially in the arrangement direction of the optical lenses so as to increase the image resolution (definition) (refer to e.g. Japanese Laid-open Patent Publication 2000-32354). However, this technology also does not solve the problem of the technology represented by Japanese Laid-open Patent Publication 2007-271301 described above to accurately derive the distance of an object (target object to be imaged) from the compound-eye imaging device.

## SUMMARY OF THE INVENTION

An object of the present invention is to provide an object distance deriving device which uses imaging means and derives a distance of an object (object distance) from the imaging means based on a high-resolution image estimated by super-resolution processing using images captured by the imaging means without using parallax so as to accurately derive the object distance even if the baseline length of the imaging device is limited.

According to the present invention, this object is achieved by an object distance deriving device comprising: imaging means for capturing images of an object using an imaging process expressed by a matrix (hereafter referred to as "imaging process matrix"); and distance calculating means for calculating a distance (hereafter referred to as "object distance") of the object from the imaging means based on the images captured by the imaging means. The distance calculating means comprises: distance setting means for setting temporary distances between the object and the imaging means; imaging process matrix calculating means for calculating an imaging process matrix (hereafter referred to as "imaging process matrix calculation") when the object is at one of the temporary distances set by the distance setting means; high-resolution image estimating means for estimating a high-resolution image (hereafter referred to as "high-resolution image estimation") by super-resolution processing using the imaging process matrix calculated by the imaging process matrix calculating means; evaluation value calculating means for calculating evaluation values (hereafter referred to as "evaluation value calculation") to evaluate the one of the temporary distances set by the distance setting means based on differences between the images captured by the imaging means and an image obtained by multiplying the imaging process matrix and the high-resolution image estimated by the high-resolution image estimating means; repeating means for repeating the imaging process matrix calculation, the high-resolution image estimation and the evaluation value calculation for each of the other temporary distances set by the distance setting means so as to calculate evaluation values to evaluate all the temporary distances; and distance determining means for determining, as an object distance, one of the temporary distances which gives a minimum or maximum evaluation value in all the evaluation values to evaluate all the temporary distances.

According to the object distance deriving device of the present invention, the distance calculating means estimates a high-resolution image using the imaging process matrix for one of the set temporary distances. Evaluation values to evaluate the one temporary distance are calculated based on differences between the images captured by the imaging means and an image obtained from the high-resolution image. The high-resolution image estimation and the evaluation value calculation are repeated for each of the other temporary distances to calculate evaluation values for all the temporary distances. Finally, one of the temporary distances which gives a minimum or maximum evaluation value in all the evaluation values for all the temporary distances is determined as an object distance. This makes it possible to accurately derive the object distance without using parallax even if the baseline length of the imaging device is limited.

Preferably, the super-resolution processing is performed by iterative back-projection using the imaging process matrix. This makes it possible to efficiently obtain a high-resolution image.

Further preferably, the imaging means is compound-eye imaging means comprising a solid-state imaging element and multiple randomly arranged optical lenses to form integrally arranged multiple imaging units to capture images formed by the optical lenses as unit images. This increases a substantial amount of information of images captured by the imaging means, making it possible to derive the object distance more accurately.

Still further preferably, the imaging means is compound-eye imaging means comprising a solid-state imaging element and multiple optical lenses to form integrally arranged multiple imaging units to capture images formed by the optical lenses as unit images, wherein the optical lenses are arranged to adapt to an optimum condition calculated by an optimizing method using an evaluation function to evaluate errors of calculated object distances. This further increases a substantial amount of information of images captured by the imaging means, making it possible to derive the object distance still more accurately.

Yet further preferably, the evaluation function is expressed by the following equation:

$$C = \frac{1}{N} \sum_{i=1}^{N} \overline{ei}$$

where N is total number of object distances set for calculation, i is distance number, and ei-bar is average error of object distance when calculating the object distance of a two-dimensional object placed at i-th distance. This secures the achievement of an increase in the substantial amount of information of the captured images to accurately derive the object distance.

While the novel features of the present invention are set forth in the appended claims, the present invention will be better understood from the following detailed description taken in conjunction with the drawings.

## BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:

FIG 1 is a schematic view, partly in block form, of an object distance deriving device of a first embodiment of the present invention;

FIG. 2 is a schematic front view of an optical lens array of a compound-eye imaging device in the object distance deriving device;

FIG. 3 is a schematic side view of the compound-eye imaging device, placed vertically, in a mode of collecting lights to the compound-eye imaging device;

FIG 4 is a flow chart showing a process of object distance calculation as performed by the object distance deriving device;

FIG. 5 is a schematic view showing a correspondence between the imaging process of the compound-eye imaging device and an imaging process matrix;

FIG. 6 is a schematic view showing a concept of super-resolution processing steps performed by iterative back-projection using the imaging process matrix in the object distance deriving device;

FIG 7 is a schematic view showing an evaluation value distribution calculated in the object distance deriving device;

FIG. 8 is a graph showing comparison in average errors of object distances derived by the object distance deriving device of the present invention and two conventional object distance deriving devices; and

FIG. 9A is a schematic side view of a conventional compound-eye imaging device, placed vertically, in a mode of collecting lights from an object, while FIG. 9B is a schematic enlarged side view of a portion of FIG. 9A as indicated by the dash-dotted circle 110.

## DESCRIPTION OF THE PREFERRED EMBODIMENTS

Embodiments of the present invention, as best mode for carrying out the invention, will be described hereinafter with reference to the drawings. The present invention relates to an object distance deriving device. It is to be understood that the embodiments described herein are not intended as limiting, or encompassing the entire scope of, the present invention. Note that like parts are designated by like reference numerals, characters or symbols throughout the drawings.

(FIRST EMBODIMENT)

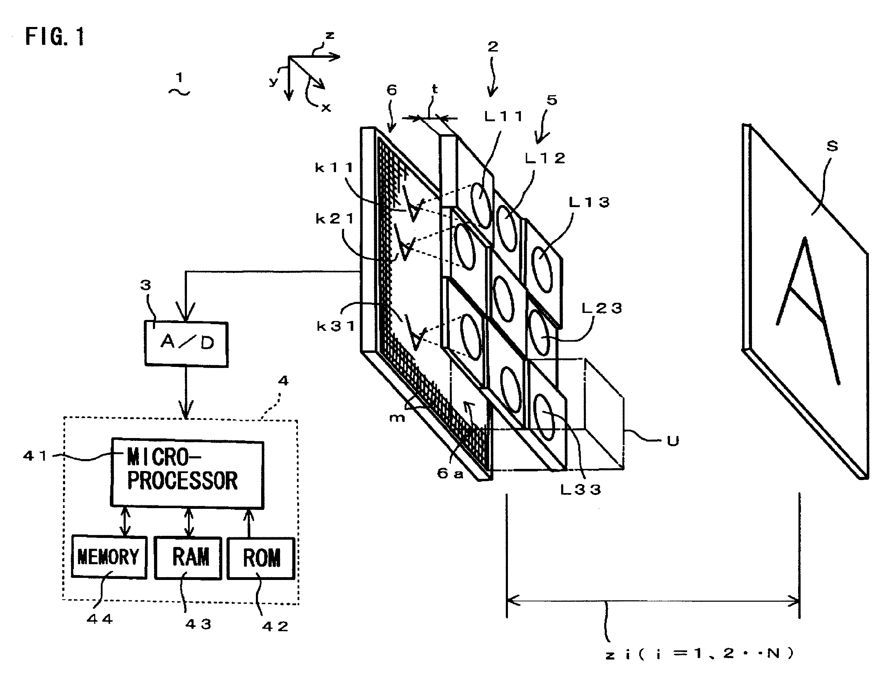

Referring to FIG. 1 to FIG 8, an object distance deriving device 1 according to a first embodiment of the present invention will be described. FIG 1 is a schematic view, partly in block form, of an object distance deriving device 1 of the present embodiment. As shown in FIG 1, the object distance deriving device 1 comprises a compound-eye imaging device 2 (claimed "imaging means" or "compound-eye imaging means") and a distance calculation unit 4 (claimed "distance calculating means") mainly composed of a microprocessor 41 for receiving, via an A/D (Analog-to-Digital) converter 3, image information captured by the compound-eye imaging device 2, and for calculating a distance (object distance) z between an object (target object to be imaged) S and the compound-eye imaging unit 2 (more specifically optical lens array 5) based on the received and digitized image information. The object S shown is two-dimensional (flat-shaped) for simplicity of description, but can be three-dimensional. As will be apparent from the description below, the microprocessor 41 comprises, or serves as, claimed "distance setting means", "imaging process matrix calculating means", "high-resolution image estimating means", "evaluation value calculating means", "repeating means" and "distance determining means".

The compound-eye imaging device 2 comprises: an optical lens array 5 formed of nine optical lenses L11, L12·· L33 arranged in a matrix array of three rows and three columns on substantially the same plane; and a solid-state imaging element 6 having many light-receiving elements m for capturing or imaging nine unit images (low-resolution images) k11, k12·· k33 formed by the respective optical lenses L11, L12·· L33. If the combination of each of the optical lenses L11, L1·· L33 with a corresponding divided area 6a of the solid-state imaging element 6 for imaging each of the unit images k11, k12·· k33 formed by the each of the optical lenses is referred to as an imaging unit U, it is understood that the compound-eye imaging device 2 comprises 9 (nine) integrally arranged imaging units U.

As shown in FIG. 1, the distance calculation unit 4 comprises: a microprocessor 41; a ROM (Read Only Memory) 42 storing e.g. an operating program for the microprocessor 41 such as a distance calculation program; a RAM (Random Access Memory) 43 for temporarily storing e.g. image data; and a large capacity memory 44. Based on the distance calculation program to perform the process of distance calculation described later, the microprocessor 41 processes image information of the unit images k11, k12·· k33 received from the compound-eye imaging device 2, so as to calculate the distance (object distance) between the object (target object) S and the compound-eye imaging device 2.

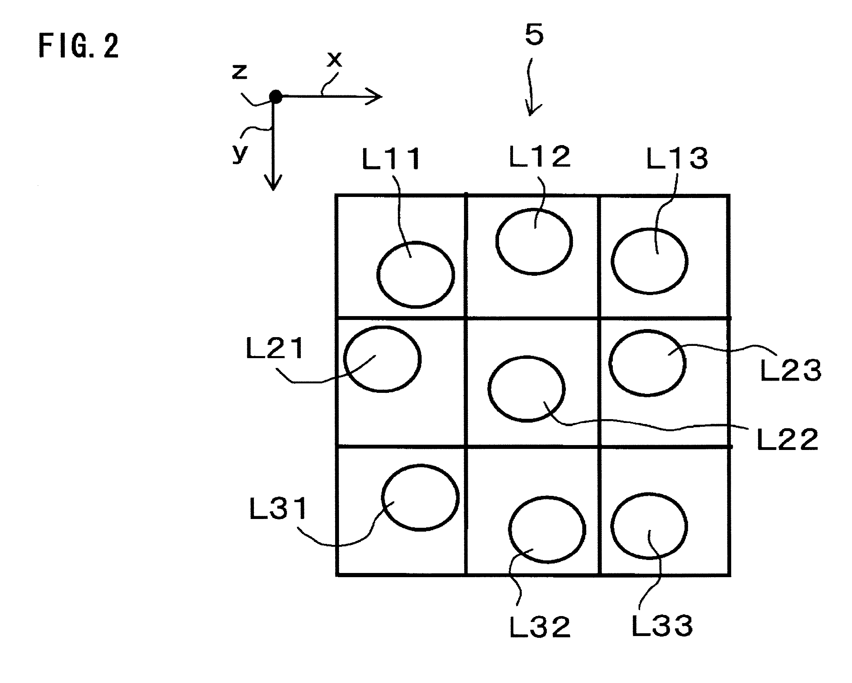

The compound-eye imaging device 2 has randomly arranged optical lenses L11, L12·· L33 for the respective imaging units U, such that when the compound-eye imaging device 2 captures unit images of an object at an infinite distance (substantially infinite distance) therefrom, all the thus captured unit images are different from each other. This will be described more specifically with reference to FIG. 1 and FIG. 2 which is a schematic front view of the optical lens array 5. As shown in FIG. 2, the optical lenses L11, L12·· L33 are randomly arranged along the x-axis and the y-axis.

Further, as shown in FIG. 1, the optical lenses L11, L12·· L33 are also randomly arranged along the z-axis by setting random thicknesses t of the optical lens array 5 for the respective optical lenses L11, L12·· L33. The term "random arrangement" is used here to mean that the positions of the optical lenses L11, L12·· L33 along the x-axis, y-axis and z-axis are not simply irregular, but are also based on physical random numbers generated by a random number table, a random number generator or the like.

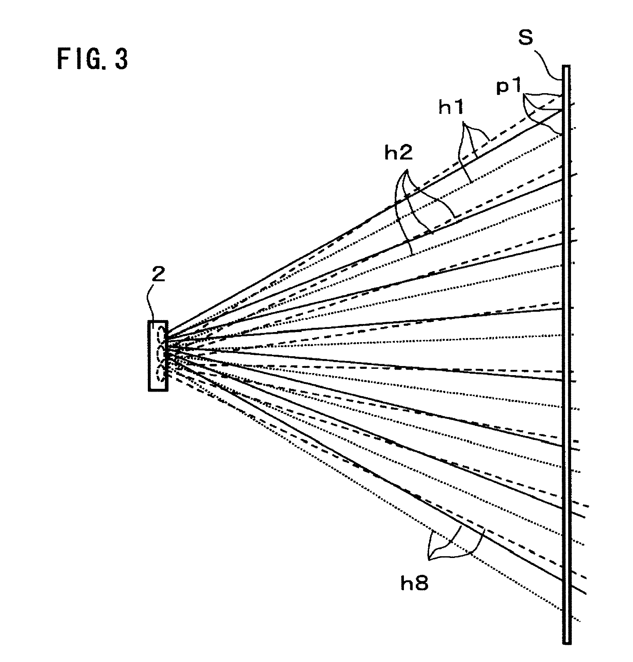

The thus structured compound-eye imaging device 2 can prevent lights collected by the optical lenses L11, L12·· L33 from being parallel to each other. This will be described more specifically with reference to FIG 3 which is a schematic side view of the compound-eye imaging device 2, placed vertically, in a mode of collecting lights h1, h2 ··h8 to the respective optical lenses L11, L12·· L33. As shown in FIG. 3, the lights h1, h2 ··h8 collected by the optical lenses L11, L12·· L33 are prevented from being parallel to each other, so that the observation points p seen from the compound-eye imaging device 2 are dispersed on the surface of the object S, thereby increasing a substantial amount of information of the images captured by the compound-eye imaging device 2. Note that in order to achieve the random arrangement of the optical lenses L11, L12·· L33, it is also possible to randomly change other optical conditions such as focal lengths of the optical lenses for the respective imaging units U.

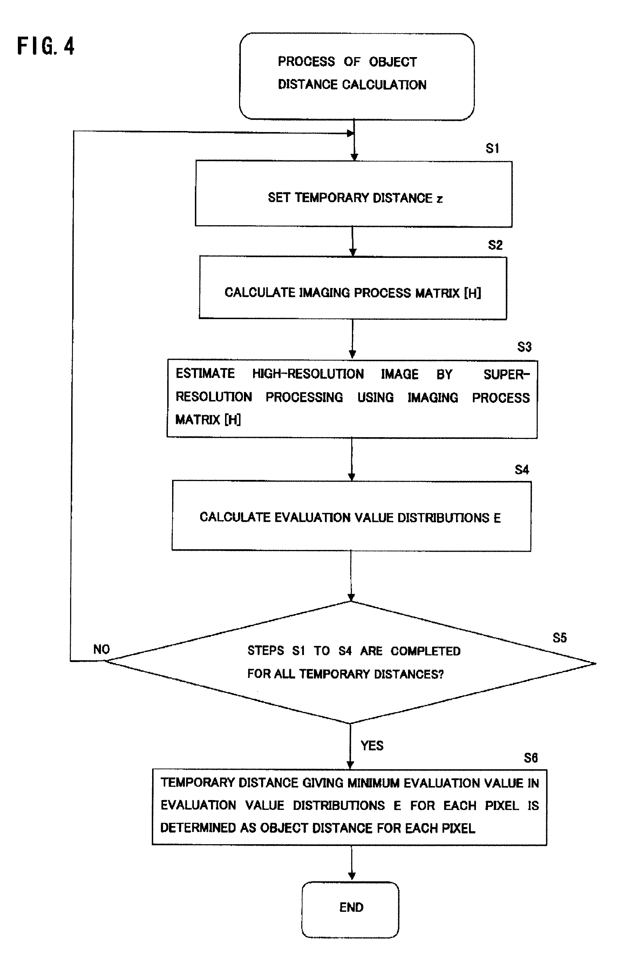

Next, referring to the flow chart of FIG. 4, the process of object distance calculation as performed by the microprocessor 41 in the object distance deriving device 1 of the first embodiment will be described. The object distance deriving device 1 is here assumed to be in a state where multiple temporary distances z1, z2·· zN are stored as data in ROM 42 or the memory 44 in advance. First, the microprocessor 41 reads a first temporary distance z1 from the multiple temporary distances z1 to zN, and sets the temporary distance z1 (S1), and calculates an imaging process matrix [Hz1] which represents a relationship between the object S and the captured images under the assumption that the object S is positioned at the temporary distance z1 from the compound-eye imaging device 2 (S2).

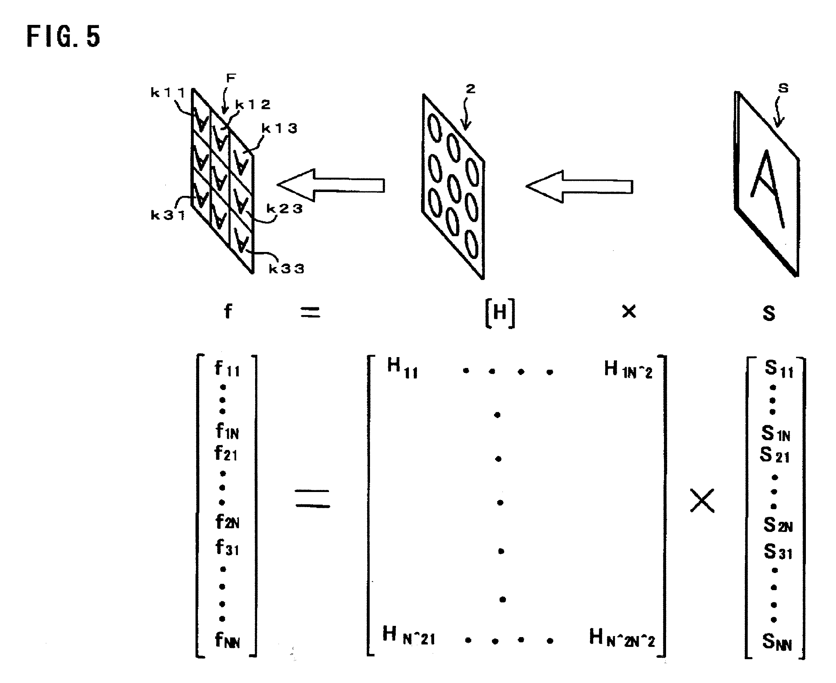

Referring to FIG. 5, the imaging process matrix [H] will be described. FIG. 5 is a schematic view showing a correspondence between the imaging process of the compound-eye imaging device 2 and the imaging process matrix [H]. Assuming that the object S (an image "A" on the surface of the object S) is represented by an image vector s, and a captured image (low-resolution image) F is represented by an image vector f, then the relationship between the object S and the captured image F obtained through the imaging process of the compound-eye imaging device 2 is linear, so that the equation $f=[H]\times s$ is satisfied. Based on information of image formation of the compound-eye imaging device 2 stored in the memory 44, such as arrangement, focal lengths and three-dimensional parallax of the optical lenses L11, L12·· L33, the microprocessor 41 calculates the imaging process matrix [Hz1] when the object S is positioned at the temporary distance z1.

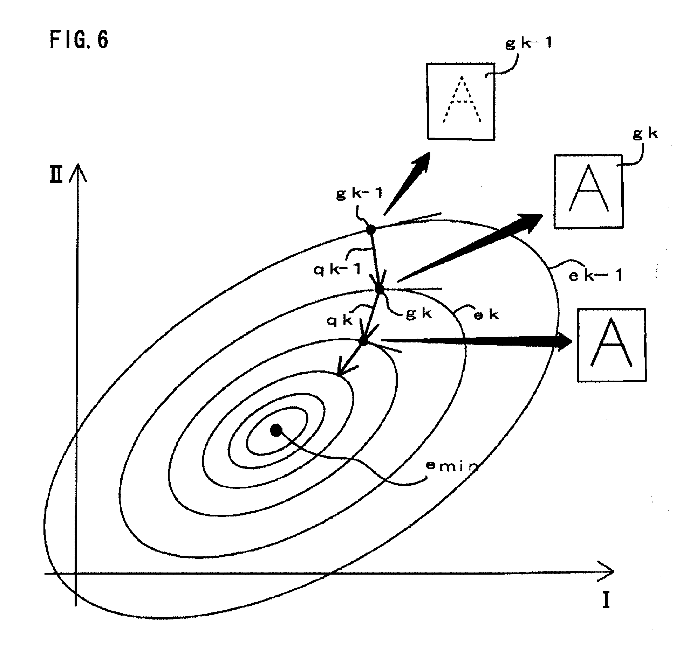

Next, using the calculated imaging process matrix [Hz1], the microprocessor 41 estimates a high-resolution image by super-resolution processing (S3). This will be described more specifically with reference to FIG. 6 which is a schematic view showing a concept of super-resolution processing steps performed by iterative back-projection using the imaging process matrix in the object distance deriving device 1, in which the axes I and II represent evaluation value space. First, the microprocessor 41 sets a temporary high-resolution image gk-1, and then calculates a gradient vector qk-1 to reduce an image evaluation value e described later. Using this gradient vector qk-1, the microprocessor 41 corrects the temporary high-resolution image gk-1 to obtain a resolution-improved temporary high-resolution image gk. The microprocessor 41 repeats such steps to finally estimate a high-resolution image g ($g_{cmin}$) with a minimum evaluation value e (emin).

These steps to estimate a high-resolution image with a minimum evaluation value can be expressed by the following equation (1):

$$g = argmin_g \left\| e \right\|^2 \quad \cdots \quad (1)$$

Here, the image evaluation value e is a difference between the image vector f and the temporary high-resolution image gk multiplied by the imaging process matrix [H], and can be expressed by the following equation (2):

$$e = f - [H]g \quad \cdots \quad (2)$$

Further, the gradient vector q can be expressed by the following equation (3):

$$q = 2[\mathrm{H}]^t (f - [\mathrm{H}]g) \quad \cdots (3)$$

Note that in the present embodiment, the temporary high-resolution image gk-1 first set by the microprocessor 41 is made by averaging the nine unit images k11, k12·· k33 in the captured image F (refer to FIG. 5).

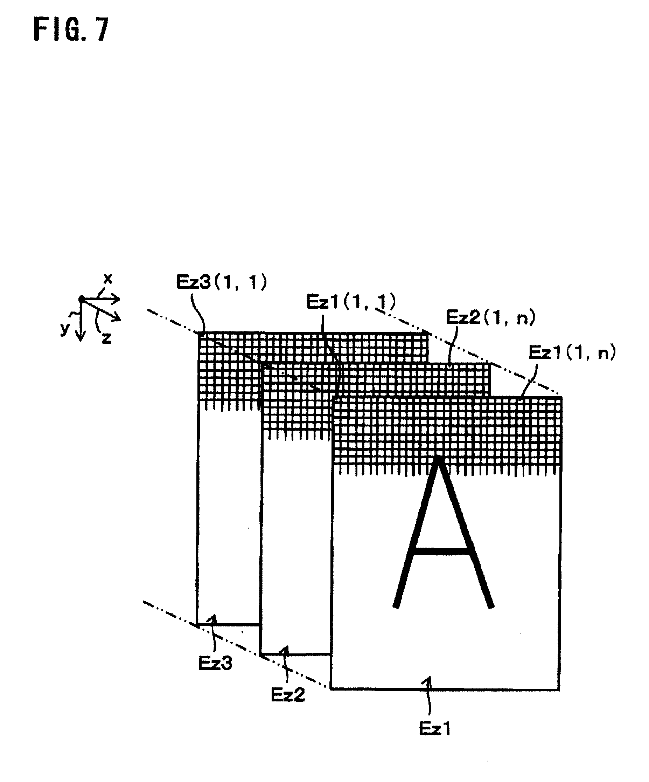

Next, the microprocessor 41 calculates a distribution E of evaluation values (hereafter referred to as evaluation value distribution E) using the high-resolution image g as estimated above (S4). This will be described more specifically with reference to FIG. 7 which is a schematic view showing the evaluation value distribution E calculated in the object distance deriving device 1. The evaluation value distribution E is expressed by the following equation (4):

$$E = [\mathrm{H}]^t (f - [\mathrm{H}]g)^2 \quad \cdots (4)$$

The evaluation value distribution E is an image vector, so that it can be expressed on a plane showing individual evaluation values E(1,1), E(1,2)·· of respective pixels divided by lines parallel to the x and y axes of the xy coordinate as shown in FIG. 7. The calculated evaluation value distribution E is stored in the memory 44. Note that FIG. 7 shows an evaluation value distribution Ez1 when the temporary distance is set at z1 as well as evaluation value distributions Ez2 and Ez3 when the temporary distances are set at z2 and z3, respectively.

Next, the microprocessor 41 determines whether or not steps S1 to S4 are completed for all the set temporary distances z (S5). If not, the process goes back to step S1, and the microprocessor 41 sets the next temporary distance (e.g. z2) as a distance of the object S, and performs steps S2 to S4 again, and repeats this process until the last set temporary distance. If the microprocessor 41 determines that steps S1 to S4 are completed for all the set temporary distances (YES in S5), the microprocessor 41 selects and determines, as an object distance for each pixel, one of the temporary distances which gives a minimum evaluation value for the each pixel in the evaluation value distributions E (Ez1, Ez2··) that are stored in the memory 44 for the respective temporary distances z1, z2·· (S6).

Here, it is assumed that the object S is two-dimensional (flat-shaped), so that the evaluation values for all the pixels in each of the evaluation value distributions Ez1, Ez2·· are the same. Thus, for example, if the microprocessor 41 determines that an evaluation value for one (or each) of the pixels in the evaluation value distribution Ez1 with the temporary distance at z1 is minimum as compared to the other evaluation value distributions Ez1, Ez2··, the microprocessor 41 determines that the object distance of the two-dimensional object S is z1. On the other hand, if the object S is three-dimensional, the microprocessor 41 determines, as an object distance of each pixel, a temporary distance giving a minimum evaluation value in the evaluation value distributions E. This will be described more specifically with reference to FIG. 7 below.

Referring to FIG. 7, if, for example, the evaluation value Ez1(1,1) for the pixel at position (1,1) in the evaluation value distribution Ez1 is minimum as compared to the other evaluation values Ez2(1,1), Ez3(1,1)·· for the corresponding pixel at position (1,1) in the other evaluation value distributions Ez2, Ez3··, the microprocessor 41 determines that the pixel distance at position (1,1) (i.e. object distance at such pixel) is z1. Similarly, if, for example, the evaluation value Ez2(1,2) for the pixel at position (1,2) in the evaluation value distribution Ez2 is minimum as compared to the other evaluation values Ez1(1,2), Ez3(1,2)·· for the corresponding pixel at position (1,2) in the other evaluation value distributions Ez1, Ez2··, the microprocessor 41 determines that the pixel distance at position (1,2) (i.e. object distance at such pixel) is z2. By repeating such determining step for all the pixels, the microprocessor 41 determines the object distance of the object S for each of all the pixels which form the image of the object S.

As described above, the object distance deriving device 1 of the present embodiment does not use parallax and does not depend on the baseline length of the compound-eye imaging device 2 to calculate or derive the object distance. Thus, it is apparent that the object distance deriving device 1 can calculate an object distance without using parallax, and can accurately derive the object distance even by using a small-sized compound-eye imaging device with limited baseline length. The accuracy of the operation of the object distance deriving device 1 will be described below in terms of average errors of the derived object distances.

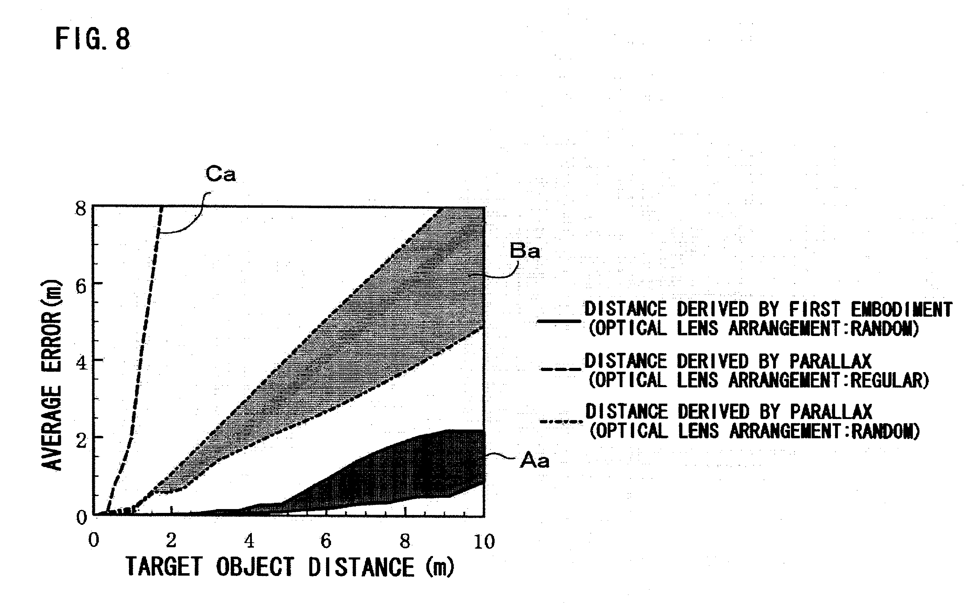

FIG. 8 is a graph showing comparison in average errors of object distances derived by the object distance deriving device 1 of the present embodiment (present object distance deriving device) and two conventional object distance deriving devices. FIG. 8 shows average errors Aa (hereafter referred to as present average errors) of object (target object) distances derived by the object distance deriving device 1, and average errors Ba (hereafter referred to as first conventional average errors) of object distances derived by one of the conventional object distance deriving devices (hereafter referred to as first conventional object distance deriving device) which uses the same compound-eye imaging device 2 as that used in the object distance deriving device 1 and at the same time uses parallax for object distance calculation.

Both the present and the first conventional average errors Aa and Ba are those obtained by simulation. Both the present object distance deriving device and the first conventional object distance deriving device use optical lens arrays 5 with random arrangements of optical lenses. For the simulation, three different random arrangements of optical lenses were used for both the present and the first conventional object distance deriving devices. The reason why each of the average errors Aa and Ba has a range as shown by shades in the graph of FIG. 8 is because of the use of three different random arrangements of optical lenses. The upper curve and the lower curve in each of the ranges of the average errors Aa and Ba show results of the simulation which gave the maximum and minimum average errors in the three average errors obtained by the three different random arrangements of optical lenses.

The specification of the compound-eye imaging device 2 used in each of the present and the first conventional object distance deriving devices was that the optical lenses L11, L12·· L33 each had a focal length of 1.3 mm, an F-number of 2.6 and an inter-lens pitch (average) of 0.5 mm, and were placed at positions randomly offset within 10 μm each in the directions of x-axis, y-axis and/or z-axis from the regular center position in the respective imaging units U. Further, as described above, three kinds of optical lens arrays 5 with three different random arrangements of optical lenses, respectively, were prepared for the compound-eye imaging device 2 of each of the present and the first conventional object distance deriving devices. Each of the object distance deriving devices with the compound-eye imaging devices 2 with the three different optical lens arrays 5 was subjected to the calculation of average errors by simulation.

FIG. 8 shows the thus calculated present average errors Aa and first conventional average errors Ba each with the three different compound-eye imaging devices 2, in which the range between the upper curve and the lower curve of each of the present average errors Aa and the first conventional average errors Ba is indicated by shade. It is apparent from FIG 8 that the present average errors Aa are significantly reduced compared to the first conventional average errors Ba over the entire range of object distance (target object distance). For example, when the object distance is 4 m, the present average errors Aa in the present object distance deriving device 1 are about 10 cm or smaller, whereas the first conventional average errors Ba in the first conventional object distance deriving device using parallax are about 1.5 m to 3 m. Further, when the object distance is 8 m, the present average errors Aa are about 0.5 m to 2 m, whereas the first conventional average errors Ba are about 3.5 m to 7 m.

Note that FIG. 8 also shows average errors Ca of object (target object) distances derived by the other one of the conventional object distance deriving devices (hereafter referred to as second conventional object distance device) which uses parallax for object distance calculation and uses the same compound-eye imaging device 2 as that used in the first conventional object distance deriving device, except that the optical lenses of the compound-eye imaging device of the second conventional object distance device are regularly arranged in contrast to the random arrangement described above. It is apparent from FIG. 8 that the values of the average errors Ca are significantly larger than the present average errors Aa, even making it impossible to derive an object distance when the object distance is 1 m or longer.

(SECOND EMBODIMENT)

Hereinafter, an object distance deriving device according to a second embodiment of the present invention will be described. The object distance deriving device of the present embodiment is the same as the object distance deriving device 1 of the first embodiment, except that the arrangement of the optical lenses L11, L12·· L33 in the present embodiment is different from that in the first embodiment where the optical lenses of the compound-eye imaging device 2 are randomly arranged for the respective imaging units U. In the present embodiment, in order to increase a substantial amount of information of the captured images for deriving a more accurate object (target object) distance, the optical lenses L11, L12·· L33 are arranged to adapt to an optimum condition calculated by an optimizing method using an evaluation function to evaluate average errors of an object distance.

More specifically, the following equation (5) is an evaluation function C which represents an average of average errors for respective object distances:

$$C = \frac{1}{N} \sum_{i=1}^{N} \overline{ei} \quad \cdots \quad (5)$$

where N is total number of object distances set for calculation, i is distance number, and ei-bar is average error of object distance when calculating the object distance of a two-dimensional object placed at i-th distance. The well-known optimizing methods such as downhill simplex and genetic algorithm can be used as the optimizing method to optimize the arrangement of the optical lenses L11, L12·· L33. More specifically, the positions of the respective optical lenses L11, L12·· L33 are changed by a small amount each time in the directions of x-axis, y-axis and z-axis to change the evaluation function C to allow sufficient number of successive changes of the positions of the optical lenses so as to obtain an arrangement of the optical lenses which allows a value of the evaluation function C to be minimum, and which is thus determined as an optimum arrangement of the optical lenses.

Further note that if an object distance longer than a distance D, which is the longest in the object distances to cause degeneracy, is included in the object distances set for calculation of the evaluation function C, it is possible to set the arrangement of the optical lenses L11, L12·· L33 to enable to increase a substantial amount of information of the captured images, thereby making it possible to more accurately derive the object distance. The distance D can be expressed by the following equation (6):

$$D = \frac{wb}{u} \quad \cdots \quad (6)$$

where w is distance between optical lens array 5 and solid-state imaging element 6, b is maximum baseline length between optical lenses, and u is average pitch between light-receiving elements m.

Except for the difference in the arrangement of the optical lenses L11, L12·· L33 between the object distance deriving device of the present embodiment and that of the first embodiment, the object distance deriving device of the present embodiment has the same structures as those of the first embodiment. Thus, the object distance deriving device of the present second embodiment also comprises a microprocessor 41 ("distance calculating means") which comprises, or serves as, "distance setting means", "imaging process matrix calculating means", "high-resolution image estimating means", "evaluation value calculating means", "repeating means" and "distance determining means" that operate similarly as those of the object distance deriving device 1 of the first embodiment.

As described above, the object distance deriving device of the present second embodiment is basically the same as the object distance deriving device of the first embodiment except for the arrangement of the optical lenses L11, L12·· L33, and thus does not use parallax and does not depend on the baseline length of the compound-eye imaging device to calculate or derive the object distance, which is similar as in the first embodiment. Thus, it is apparent that the object distance deriving device of the present embodiment also can calculate an object distance without using parallax, and can accurately derive the object distance even by using a small-sized compound-eye imaging device with limited baseline length. In addition, in the present second embodiment, the optical lenses L11, L12·· L33 are arranged to adapt to an optimum condition calculated by an optimizing method using an evaluation function to evaluate average errors of an object distance. This makes it possible to increase the resolution of the unit images, thereby increasing the accuracy of deriving an object distance.

It is to be noted that the present invention is not limited to the above embodiments, and various modifications are possible within the spirit and scope of the present invention. For example, in the first embodiment, and thus also in the second embodiment, the object distance deriving device can be designed to use a maximum evaluation value instead of the minimum evaluation value. More specifically, in the first and second embodiments, one of the temporary distances which gives a minimum evaluation value for each pixel in the evaluation value distributions E (Ez1, Ez2··) that are stored in the memory 44 for the respective temporary distances z1, z2·· is selected and determined by the microprocessor 41 as an object distance for the each pixel. However, if the gradient vector, which is expressed by equation (3) and which reduces an image evaluation value, is replaced by a gradient vector which increases an image evaluation value, for example, it can be designed so that one of the temporary distances which gives a maximum evaluation value for each pixel in the evaluation value distributions stored in the memory for the respective temporary distances is selected and determined by the microprocessor as an object distance for the each pixel.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

This application is based on Japanese patent application 2008-270060 filed October 20, 2008, the content of which is hereby incorporated by reference.

## Claims

1. An object distance deriving device comprising: imaging means for capturing images of an object using an imaging process expressed by a matrix (hereafter referred to as "imaging process matrix"); and distance calculating means for calculating a distance (hereafter referred to as "object distance") of the object from the imaging means based on the images captured by the imaging means,
wherein the distance calculating means comprises:
distance setting means for setting temporary distances between the object and the imaging means;
imaging process matrix calculating means for calculating an imaging process matrix (hereafter referred to as "imaging process matrix calculation") when the object is at one of the temporary distances set by the distance setting means;
high-resolution image estimating means for estimating a high-resolution image (hereafter referred to as "high-resolution image estimation") by super-resolution processing using the imaging process matrix calculated by the imaging process matrix calculating means;
evaluation value calculating means for calculating evaluation values (hereafter referred to as "evaluation value calculation") to evaluate the one of the temporary distances set by the distance setting means based on differences between the images captured by the imaging means and an image obtained by multiplying the imaging process matrix and the high-resolution image estimated by the high-resolution image estimating means;
repeating means for repeating the imaging process matrix calculation, the high-resolution image estimation and the evaluation value calculation for each of the other temporary distances set by the distance setting means so as to calculate evaluation values to evaluate all the temporary distances; and
distance determining means for determining, as an object distance, one of the temporary distances which gives a minimum or maximum evaluation value in all the evaluation values to evaluate all the temporary distances.

2. The object distance deriving device according to claim 1,
wherein the super-resolution processing is performed by iterative back-projection using the imaging process matrix.

3. The object distance deriving device according to claim 1 or 2,
wherein the imaging means is compound-eye imaging means comprising a solid-state imaging element and multiple randomly arranged optical lenses to form integrally arranged multiple imaging units to capture images formed by the optical lenses as unit images.

4. The object distance deriving device according to claim 1 or 2,
wherein the imaging means is compound-eye imaging means comprising a solid-state imaging element and multiple optical lenses to form integrally arranged multiple imaging units to capture images formed by the optical lenses as unit images,
wherein the optical lenses are arranged to adapt to an optimum condition calculated by an optimizing method using an evaluation function to evaluate errors of calculated object distances.

5. The object distance deriving device according to claim 4,
wherein the evaluation function is expressed by the following equation:

$$C = \frac{1}{N} \sum_{i=1}^{N} \overline{ei}$$

where N is total number of object distances set for calculation, i is distance number, and ei-bar is average error of object distance when calculating the object distance of a two-dimensional object placed at i-th distance.

S
2
5
L11
L12
L13
L23
L33
U
t
6
6a
m
k11
k21
k31
z
x
y
1
zi (i = 1, 2・・N)
A/D
3
4
MICRO-PROCESSOR
41
ROM
42
RAM
43
MEMORY
44

FIG. 1

5
L11
L12
L13
L21
L22
L23
L31
L32
L33
x
y
z

FIG. 2

S
p1
h1
h2
h8
2

FIG. 3

FIG. 4

PROCESS OF OBJECT DISTANCE CALCULATION
S1
SET TEMPORARY DISTANCE z
S2
CALCULATE IMAGING PROCESS MATRIX [H]
S3
ESTIMATE HIGH-RESOLUTION IMAGE BY SUPER-RESOLUTION PROCESSING USING IMAGING PROCESS MATRIX [H]
S4
CALCULATE EVALUATION VALUE DISTRIBUTIONS E
S5
STEPS S1 TO S4 ARE COMPLETED FOR ALL TEMPORARY DISTANCES?
NO
YES
S6
TEMPORARY DISTANCE GIVING MINIMUM EVALUATION VALUE IN EVALUATION VALUE DISTRIBUTIONS E FOR EACH PIXEL IS DETERMINED AS OBJECT DISTANCE FOR EACH PIXEL
END

S
2
F
k11
k12
k13
k23
k33
k31
f = [H] × S

FIG. 5

FIG. 6

g k-1
g k
II
g k-1
q k-1
e k-1
g k
q k
e k
e min
I

FIG. 7

x
y
z
Ez3(1, 1)
Ez1(1, 1)
Ez2(1, n)
Ez1(1, n)
A
Ez3
Ez2
Ez1

FIG. 8

Ca
Ba
Aa
AVERAGE ERROR (m)
0
2
4
6
8
TARGET OBJECT DISTANCE (m)
0
2
4
6
8
10
DISTANCE DERIVED BY FIRST EMBODIMENT (OPTICAL LENS ARRANGEMENT:RANDOM)
DISTANCE DERIVED BY PARALLAX (OPTICAL LENS ARRANGEMENT:REGULAR)
DISTANCE DERIVED BY PARALLAX (OPTICAL LENS ARRANGEMENT:RANDOM)

FIG. 9A
FIG. 9B
100
110
101
S
p1
p2
h1
h2
h7
h8
L1
L2
L3
M1
M2
M3
m1
m2
m7
m8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007271301 A
- JP 2000032354 A
- JP 2008270060 A